# FASCICULE DE BREVET EUROPEEN

(11) **EP 2 893 252 B1**
(45) Date de publication et mention de la délivrance du brevet: **06.05.2020**
(21) Numéro de dépôt: 13774726.7
(22) Date de dépôt: 05.09.2013
(51) Int. Cl.: F21V 8/00, B60Q 3/64, B60Q 3/208

(54) **VITRAGE ECLAIRANT**
BELEUCHTETE GLASSCHEIBE
ILLUMINATED GLASS PANEL

(30) Priorité: 06.09.2012 FR 1258312
(43) Date de publication de la demande: 15.07.2015
(73) Titulaire: Saint-Gobain Glass France, 92400 Courbevoie (FR)
(72) Inventeur: VERRAT-DEBAILLEUL, Adèle, 60150 Villers-sur-Coudun (FR); BAUERLE, Pascal, 80700 Roye (FR); KLEO, Christophe, 60350 Attichy (FR)
(74) Mandataire: Saint-Gobain Recherche
(86) Numéro de dépôt international: PCT/FR2013/052045
(87) Numéro de publication internationale: WO 2014/037671

(56) Documents cités:
- EP-A1- 0 823 587
- EP-A2- 1 903 359
- DE-A1- 10 204 359
- DE-A1-102007 013 627
- DE-U1- 20 105 546
- FR-A1- 2 955 539
- US-A1- 2012 104 790
- REICHELT ELEKTRONIK: "Katalog 06.1/2011", REICHELT ELEKTRONIK KATALOG, vol. 06.1/2011, 30 juin 2011 (2011-06-30), pages 486-487, XP002717199, Sande

## Description

La présente invention concerne un vitrage éclairant, en particulier un vitrage de véhicule automobile, capable d'émettre de la lumière de façon orientée.

Il est connu d'incorporer des modules de diodes électroluminescentes (modules LED) au niveau du bord de vitrages simples ou feuilletés, de façon à ce que la lumière émise par les LED entre par la tranche d'une feuille de verre et soit guidée par celle-ci jusqu'à un élément diffusant, appelé également moyen d'extraction de la lumière.

Ces vitrages éclairants ont souvent une fonction d'éclairage d'ambiance. Le moyen d'extraction de la lumière diffuse en effet la lumière, extraite de la feuille éclairée, indifféremment dans toutes les directions. Dans certains cas il peut toutefois être souhaitable, voire nécessaire, de limiter l'angle de diffusion de la lumière extraite. Ainsi par exemple dans le domaine de l'habitat, lorsqu'on souhaite éclairer un élément de décoration particulier pour le mettre en valeur, ou encore dans le domaine automobile lorsqu'on souhaite éclairer une zone de l'habitacle, à proximité d'un passager, sans gêner les autres passagers, et notamment le conducteur.

On pourrait certes envisager d'orienter la lumière diffuse, extraite de la feuille guide d'onde, par un déflecteur fixé sur une des faces de la feuille éclairée à proximité de l'élément diffusant. Une telle solution serait toutefois peu satisfaisante d'un point de vue esthétique car un tel déflecteur, opaque, ferait saillie du vitrage et dégraderait significativement l'impression de planéité et de transparence du vitrage lorsque la source lumineuse est éteinte.

La présente invention est basée sur l'idée de remplacer le moyen d'extraction de la lumière diffusant, par un guide d'onde plat comportant une tranche en biseau, fixé en bordure du vitrage. Cette tranche en biseau, lorsqu'elle reçoit la lumière injectée par la tranche qui lui est opposée, la réfléchit en la déviant. La diminution de l'angle d'incidence sur les surfaces principales du guide d'onde qui en résulte permet à la lumière de sortir du guide d'onde. Lorsque cette réflexion par la tranche en biseau est majoritairement de type spéculaire, elle permet d'orienter la lumière selon une certaine direction plutôt que de la diffuser selon un angle très large.

La demande DE 10 2007 013 627 divulgue une lampe pour éclairer l'habitacle d'un véhicule automobile. Cette lampe comporte une source lumineuse (2) couplée à un système d'actionnement (3) comportant un émetteur optique (5), un récepteur optique (13) et un guide d'onde plat. L'habitacle est éclairé directement par la source lumineuse, différente de l'émetteur optique, tandis que le guide d'onde plat recevant le rayonnement de l'émetteur optique fait partie du système d'actionnement. On peut raisonnablement supposer que le rayonnement injecté par l'émetteur optique dans le guide d'onde se situe dans une gamme de longueur d'onde invisible pour l'œil humain, telle que l'infra-rouge. En effet, il n'est pas souhaitable qu'un rayonnement visible soit émis en continu vers l'intérieur de l'habitacle par un composant du système d'actionnement.

La présente invention a pour objet un vitrage, de préférence un vitrage de véhicule automobile, comprenant
- une feuille de verre ou de plastique transparente avec une première face principale, une deuxième face principale et une tranche;
- un guide d'onde plat avec une première face principale, une deuxième face principale, une tranche d'injection et une tranche en biseau, opposée à la tranche d'injection;
- une source de lumière, de préférence un module de diodes électroluminescentes (module **LED**), positionnée en regard de la tranche d'injection du guide d'onde plat et ayant une puissance suffisante pour injecter dans celui-ci un flux lumineux d'au moins 35 lumens (Im),
le guide d'onde plat étant fixé *via* sa deuxième face principale à la première face principale de la feuille de verre.

La source de lumière de la présente invention émet une lumière visible pour l'œil humain dans la gamme de longueur d'onde comprise entre environ 400 nm et 780 nm.

Cette source lumineuse est de préférence capable d'émettre un flux lumineux d'au moins 55 lm, en particulier d'au moins 100 lm, et idéalement d'au moins 200 lm. Ce flux lumineux doit être d'autant plus important que l'efficacité du guide d'onde (flux lumineux en sortie/flux lumineux à l'entrée) est basse. Elle varie en fonction de la longueur du chemin optique parcouru, de la transparence du matériau, de la qualité du couplage entre la source lumineuse et le guide d'onde et est généralement de l'ordre de 20 à 30 %.

Pour un éclairage satisfaisant, le flux lumineux en sortie de guide d'onde devrait être d'au moins 10 lm, de préférence compris entre 12 et 40 lm, en particulier entre 15 et 30 lm.

La feuille de verre ou de plastique et le guide d'onde du vitrage de la présente invention ont chacun deux faces principales, essentiellement parallèles l'une à l'autre. On appellera ci-après « première face principale » la face destinée à être orientée vers l'intérieur de l'habitacle ou du bâtiment et « deuxième face principale » celle qui sera dirigée vers l'extérieur du bâtiment ou de l'habitacle du véhicule.

Le guide d'onde est fixé à la feuille de verre de manière à ce que sa deuxième surface principale soit tournée vers la première surface principale de la feuille de verre.

Le guide d'onde plat est de préférence fixé à la feuille de verre ou de plastique de manière à ce que son plan principal soit sensiblement parallèle au plan principal de la feuille. Cette fixation peut se faire par exemple par collage, ou bien les bords de la feuille et du guide d'onde plat peuvent être maintenus ensemble par un dispositif de serrage ou par l'encapsulation. L'adhésif utilisé pour le collage est de préférence transparent et présente un indice de réfraction inférieur à celui du guide d'onde.

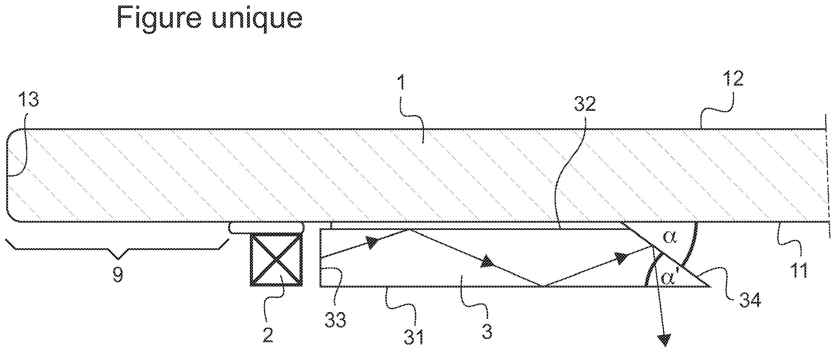

Le biseau du guide d'onde est tel que l'angle aigu (a) correspond à l'angle que forme la tranche avec la première face principale du guide d'onde. Autrement dit, la pointe du biseau n'est pas en contact avec la première face principale de la feuille (voir Figure 1).

La valeur de l'angle aigu (a) que forme la tranche en biseau avec la première surface principale du guide d'onde est comprise entre 10° et 80°, de préférence entre 20° et 60°, en particulier entre 25° et 55°. Lorsque le guide d'onde est parallèle au plan de la feuille de verre, cet angle α est égal à l'angle a' que forme la tranche en biseau du guide d'onde avec la première face principale de la feuille de verre.

Dans un mode de réalisation, la tranche en biseau du guide d'onde est couverte d'un revêtement réfléchissant.

L'effet technique recherché par la présente invention est toutefois également atteint, à un moindre degré, en l'absence d'un tel revêtement réfléchissant. En effet, l'indice optique de l'air étant sensiblement égal à 1 et l'indice optique du guide d'onde significativement supérieur à 1, tout rayon de lumière arrivant depuis l'intérieur du guide sur la tranche en biseau avec un angle d'incidence θ supérieur à une valeur donnée θ₁ est réfléchi par ladite tranche (loi de Snell-Descartes). L'absence de revêtement réfléchissant sur la tranche en biseau se traduit toutefois par la réfraction d'une certaine fraction de la lumière (θ < θ₁) qui est ainsi perdue pour une réorientation ciblée. Cette fraction réfractée dépend de la valeur de l'angle que la tranche en biseau forme par rapport au plan principal du guide d'onde : plus le biseau est aigu, c'est-à-dire plus α est faible, plus la fraction de lumière perdue par réfraction est faible et moins la présence d'un revêtement réfléchissant sur la tranche en biseau est utile.

Le revêtement réfléchissant est de préférence un revêtement métallique. Lorsque ce revêtement métallique est suffisamment épais pour être opaque à la lumière guidée, sa présence supprime la perte de lumière par réfraction et maximise ainsi la fraction de lumière réfléchie. On utilisera de préférence des métaux à réflectivité importante, par exemple des couches à base d'argent, de nickel, de chrome, de fer, de cuivre et/ou d'aluminium.

Dans un mode de réalisation, ce revêtement réfléchissant couvrant la surface de la tranche en biseau s'étend en outre au moins sur une partie de la deuxième face principale du guide d'onde plat.

La tranche en biseau a de préférence une rugosité suffisamment faible pour que la réflexion de la lumière injectée par la tranche d'injection et guidée par le guide d'onde soit majoritairement spéculaire.

Dans un mode de réalisation, la tranche en biseau peut présenter une courbure convexe ou concave ou bien une texturation de type lentille de Fresnel, optiquement équivalente à une telle courbure. Une tranche en biseau présentant une légère courbure permet avantageusement de focaliser ou de disperser la lumière réfléchie.

Le guide d'onde plat peut être en principe en n'importe quel matériau présentant un faible coefficient d'absorption de la lumière. On peut citer en tant que matériaux transparents préférés le verre minéral ou les matières plastiques, en particulier le polycarbonate (PC), le poly(méthacrylate de méthyle) (PMMA) ou les copolymères de cyclo-oléfines (COC).

Le guide d'onde plat est un élément rapporté fixé à proximité de la périphérie de la première feuille, de préférence de manière à ce que la tranche d'injection soit parallèle à la tranche de la feuille de verre.

La largeur du guide d'onde (distance entre la tranche d'injection et la pointe de la tranche en biseau) est généralement assez limitée par rapport aux dimensions de la feuille. Un des principaux avantages du vitrage de la présente invention réside dans le fait que le chemin optique que parcourt la lumière dans le guide d'onde, avant d'être réfléchie et éjectée, est relativement court. La largeur du guide d'onde est par conséquent de préférence comprise entre 3 et 40 cm, en particulier entre 5 et 30 cm et idéalement entre 7 et 20 cm.

Dans un mode de réalisation particulièrement intéressant du vitrage de la présente invention, la feuille de verre ou de plastique est en une matière teintée et le guide d'onde est en un matériau transparent incolore.

Comme déjà mentionné ci-dessus, la tranche d'injection du guide d'onde plat est sensiblement parallèle à la tranche de la feuille. Les deux tranches sont de préférence décalées l'une par rapport à l'autre, de manière à laisser sur la première face principale de la feuille une bande libre pour la fixation des modules LED à proximité de la tranche d'injection du guide d'onde, et/ou pour le collage du vitrage à la carrosserie du véhicule.

Cette bande libre entre la tranche d'injection du guide d'onde et la tranche de la feuille présente de préférence une largeur comprise entre 1 et 10 cm, en particulier entre 3 et 8 cm.

Le guide d'onde plat peut comprendre en outre un ou plusieurs éléments diffusants situé(s) entre la tranche d'injection et la tranche en biseau. Cet élément de diffusion peut être situé
- sur la première face principale du guide d'onde (par exemple une zone dépolie ou une couche d'émail diffusant translucide),
- sur la deuxième face principale du guide d'onde (par exemple une zone dépolie ou une couche d'émail diffusant translucide ou non, ou
- dans l'épaisseur du guide d'onde (par exemple des particules ou éléments fibreux).

La présence d'un tel élément diffusant permettrait de diffuser une partie de la lumière, injectée depuis les LED, de manière à créer un éclairage ambiant, la fraction de lumière non diffusée étant orientée de manière plus ciblée par la tranche en biseau (réflexion spéculaire).

La présente invention a également pour objet un véhicule, de préférence un véhicule automobile, comportant un vitrage tel que décrit ci-dessus, le vitrage éclairant faisant de préférence partie du toit du véhicule.

La figure 1 est une représentation schématique, en section transversale, du bord d'un vitrage selon l'invention. Ce vitrage comporte une feuille 1 en verre avec une première face principale 11 dirigée vers l'intérieur du véhicule, une deuxième face principale 12 dirigée vers l'extérieur du véhicule et une tranche 13. Sur la première face principale 11 de la feuille 1 est collé un guide d'onde plat 3 présentant, lui aussi, une première face principale 31, une deuxième face principale 32 et une tranche 33. La tranche 33 du guide d'onde et la tranche 13 de la feuille sont sensiblement parallèles l'une à l'autre. Le guide d'onde 3 présente une tranche en biseau 34 opposée à la tranche d'injection 33 de la lumière. L'angle aigu α que forme la tranche en biseau 34 avec la première surface principale 31 du guide d'onde est égal à l'angle a' entre le tranche en biseau et la première surface principale 11 de la feuille de verre. Une source lumineuse 2 est située à proximité immédiate de la tranche d'injection 33 de manière à ce que la lumière émise par la source lumineuse soit injectée *via* la tranche d'injection 33, guidée entre les première et deuxième faces principales 31,32 du guide d'onde 3 et réfléchie par la tranche en biseau 34. Le guide d'onde et la source lumineuse 2 sont fixés sur la feuille en verre de manière à laisser libre une zone 9 pour l'application d'un joint adhésif (non représenté) destiné à coller le vitrage à la carrosserie (non représentée) du véhicule.

## Revendications

1. Vitrage comprenant
- une feuille (1) de verre ou de plastique transparente avec une première face principale (11), une deuxième face principale (12) et une tranche (13) ;
- un guide d'onde plat (3) avec une première face principale (31), une deuxième face principale (32), une tranche d'injection (33) et une tranche en biseau (34), opposée à la tranche d'injection;
- une source de lumière (2) positionnée en regard de la tranche d'injection (33) du guide d'onde plat (3) et ayant une puissance suffisante pour injecter dans celui-ci un flux lumineux d'au moins 35 lumens (Im), le guide d'onde plat (3) étant fixé *via* sa deuxième face principale (32) à la première face principale (11) de la feuille de verre (1) et le biseau du guide d'onde étant tel qu'un angle (α) qui correspond à l'angle que forme la tranche en biseau (34) avec la première face principale (31) du guide d'onde est un angle aigu, et est compris entre 10° et 80°

2. Vitrage selon la revendication 1, **caractérisé par le fait que** la source lumineuse (2) est capable d'émettre un flux lumineux d'au moins 55 lm, de préférence d'au moins 100 lm, et en particulier d'au moins 200 lm.

3. Vitrage selon la revendication 1 ou 2, **caractérisé par le fait que** le flux lumineux en sortie de guide d'onde est d'au moins 10 lm, de préférence compris entre 12 et 40 lm, en particulier entre 15 et 30 lm.

4. Vitrage selon l'une quelconque des revendications précédentes, **caractérisé par le fait que** l'angle aigu (a) que forme la tranche en biseau (34) avec la première surface principale (31) du guide d'onde est compris entre 20° et 60°, en particulier entre 25° et 55°.

5. Vitrage selon l'une quelconque des revendications précédentes, **caractérisé par le fait que** la tranche en biseau (34) est couverte d'un revêtement réfléchissant (35).

6. Vitrage selon la revendication 5, **caractérisé par le fait que** le revêtement réfléchissant (35) est un revêtement métallique, de préférence une couche à base d'argent, de nickel, de chrome, de fer, de cuivre et/ou d'aluminium.

7. Vitrage selon la revendication 5 ou 6, **caractérisé par le fait que** le revêtement réfléchissant (35) s'étend en outre au moins sur une partie de la deuxième face principale (32) du guide d'onde plat (3).

8. Vitrage selon l'une quelconque des revendications précédentes, **caractérisé par le fait que** la tranche en biseau (34) présente une courbure convexe ou concave, ou une texture de surface de type lentille de Fresnel.

9. Vitrage selon l'une quelconque des revendications précédentes, **caractérisé par le fait que** le guide d'onde plat (3) est en verre ou en matière plastique, de préférence en polycarbonate (PC), en poly(méthacrylate de méthyle) (PMMA) ou en copolymère de cyclo-oléfines (COC).

10. Vitrage selon l'une quelconque des revendications précédentes, **caractérisé par le fait que** la tranche d'injection (33) du guide d'onde plat (3) est sensiblement parallèle à la tranche (13) de la feuille (1).

11. Vitrage selon l'une quelconque des revendications précédentes, **caractérisé par le fait qu'**il comprend en outre un ou plusieurs éléments diffusants (5) situé(s), entre la tranche d'injection (33) et la tranche en biseau (34), sur la première face principale (31), sur la deuxième face principale (32) ou dans l'épaisseur du guide d'onde (3).

12. Vitrage selon l'une quelconque des revendications précédentes, **caractérisé par le fait qu'**il s'agit d'un vitrage de véhicule automobile.

13. Véhicule, de préférence véhicule automobile, comportant un vitrage selon l'une quelconque des revendications précédentes.

14. Véhicule selon la revendication précédente, **caractérisé par le fait que** le vitrage fait partie du toit du véhicule.

## Patentansprüche

1. Glasscheibe, die Folgendes umfasst
- ein transparentes Glas- oder Kunststoffband (1) mit einer ersten Hauptseite (11), einer zweiten Hauptseite (12) und einer Kante (13);
- einen flachen Wellenleiter (3) mit einer ersten Hauptfläche (31), einer zweiten Hauptfläche (32), einer Injektionskante (33) und einer abgeschrägten Kante (34), die der Injektionskante entgegengesetzt ist;
- eine Lichtquelle (2), die gegenüber der Injektionskante (33) des flachen Wellenleiters (3) positioniert ist und eine ausreichende Leistung aufweist, um in diesen einen Lichtfluss von mindestens 35 Lumen (lm) zu injizieren,
wobei der flache Wellenleiter (3) über seine zweite Hauptfläche (32) an der ersten Hauptfläche (11) des Glasbands (1) befestigt ist und die Abschrägung des Wellenleiters derart ist, dass ein Winkel (a), der dem Winkel entspricht, den die abgeschrägte Kante (34) mit der ersten Hauptfläche (31) des Wellenleiters bildet, ein spitzer Winkel ist und zwischen 10° und 80° beträgt.

2. Glasscheibe nach Anspruch 1, **dadurch gekennzeichnet, dass** die Lichtquelle (2) fähig ist, einen Lichtfluss von mindestens 55 Im, vorzugsweise mindestens 100 lm und insbesondere mindestens 200 lm zu emittieren.

3. Glasscheibe nach Anspruch 1 oder 2, **dadurch gekennzeichnet, dass** der Lichtfluss am Ausgang des Wellenleiters mindestens 10 Im, vorzugsweise zwischen 12 und 40 lm, insbesondere zwischen 15 und 30 lm beträgt.

4. Glasscheibe nach einem der vorstehenden Ansprüche, **dadurch gekennzeichnet, dass** der spitze Winkel (a), den die abgeschrägte Kante (34) mit der ersten Hauptfläche (31) des Wellenleiters bildet, zwischen 20° und 60°, insbesondere zwischen 25° und 55° beträgt.

5. Glasscheibe nach einem der vorstehenden Ansprüche, **dadurch gekennzeichnet, dass** die abgeschrägte Kante (34) mit einer reflektierenden Beschichtung (35) bedeckt ist.

6. Glasscheibe nach Anspruch 5, **dadurch gekennzeichnet, dass** die reflektierende Beschichtung (35) eine metallische Beschichtung ist, vorzugsweise eine Schicht auf der Basis von Silber, Nickel, Chrom, Eisen, Kupfer und/oder Aluminium.

7. Glasscheibe nach Anspruch 5 oder 6, **dadurch gekennzeichnet, dass** sich die reflektierende Beschichtung (35) außerdem mindestens über einen Teil der zweiten Hauptfläche (32) des flachen Wellenleiters (3) erstreckt.

8. Glasscheibe nach einem der vorstehenden Ansprüche, **dadurch gekennzeichnet, dass** die abgeschrägte Kante (34) eine konvexe oder konkave Krümmung oder eine Oberflächentextur vom Fresnellinsentyp aufweist.

9. Glasscheibe nach einem der vorstehenden Ansprüche, **dadurch gekennzeichnet, dass** der flache Wellenleiter (3) aus Glas oder aus Kunststoff, vorzugsweise aus Polycarbonat (PC), aus Poly(methylmethacrylat) (PMMA) oder aus Copolymer von Cycloolefinen (COC) besteht.

10. Glasscheibe nach einem der vorstehenden Ansprüche, **dadurch gekennzeichnet, dass** die Injektionskante (33) des flachen Wellenleiters (3) im Wesentlichen zu der Kante (13) der Platte (1) parallel ist.

11. Glasscheibe nach einem der vorstehenden Ansprüche, **dadurch gekennzeichnet, dass** sie außerdem ein oder mehrere Diffusionselemente (5) umfasst, die zwischen der Injektionskante (33) und der abgeschrägten Kante (34), auf der ersten Hauptfläche (31), auf der zweiten Hauptfläche (32) oder in der Stärke des Wellenleiters (3) liegt/liegen.

12. Glasscheibe nach einem der vorstehenden Ansprüche, **dadurch gekennzeichnet, dass** es sich um eine Glasscheibe für ein Kraftfahrzeug handelt.

13. Fahrzeug, vorzugsweise ein Kraftfahrzeug, das eine Glasscheibe nach einem der vorstehenden Ansprüche umfasst.

14. Fahrzeug nach dem vorstehenden Anspruch, **dadurch gekennzeichnet, dass** die Glasscheibe Teil des Fahrzeugdachs ist.

## Claims

1. A glazing comprising
- a sheet (1) of transparent glass or plastic with a first main face (11), a second main face (12) and a rim (13);
- a flat waveguide (3) with a first main face (31), a second main face (32), an injection rim (33) and a beveled rim (34), opposite the injection rim;
- a light source (2) positioned facing the injection rim (33) of the flat waveguide (3) and having sufficient power to inject therein a light flux of at least 35 lumens (lm),
the flat waveguide (3) being fixed *via* its second main face (32) to the first main face (11) of the sheet of glass (1), and
the bevel of the waveguide is such that an angle (a) which corresponds to the angle formed by the rim (34) with the first main face (31) of the waveguide is an acute angle and is between 10° and 80°.

2. The glazing as claimed in claim 1, **characterized in that** the light source (2) is capable of emitting a light flux of at least 55 lm, preferably of at least 100 lm, and in particular of at least 200 lm.

3. The glazing as claimed in claim 1 or 2, **characterized in that** the light flux at the waveguide output is at least 10 lm, preferably between 12 and 40 lm, in particular between 15 and 30 lm.

4. The glazing as claimed in any one of the preceding claims, **characterized in that** the acute angle (a) formed by the beveled rim (34) with the first main surface (31) of the waveguide is between 10° and 80°, preferably between 20° and 60°, in particular between 25° and 55°.

5. The glazing as claimed in any one of the preceding claims, **characterized in that** the beveled rim (34) is covered with a reflecting coating (35).

6. The glazing as claimed in claim 5, **characterized in that** the reflecting coating (35) is a metallic coating, preferably a layer based on silver, nickel, chrome, iron, copper and/or aluminum.

7. The glazing as claimed in claim 5 or 6, **characterized in that** the reflecting coating (35) extends also at least over a part of the second main face (32) of the flat waveguide (3).

8. The glazing as claimed in any one of the preceding claims, **characterized in that** the beveled rim (34) has a convex or concave curvature, or a surface texture of Fresnel lens type.

9. The glazing as claimed in any one of the preceding claims, **characterized in that** the flat waveguide (3) is made of glass or of plastic material, preferably of polycarbonate (PC), of poly(methyl methacrylate) (PMMA) or of cyclo-olefin copolymer (COC).

10. The glazing as claimed in any one of the preceding claims, **characterized in that** the injection rim (33) of the flat waveguide (3) is substantially parallel to the rim (13) of the sheet (1).

11. The glazing as claimed in any one of the preceding claims, **characterized in that** it further comprises one or more diffusing elements (5) situated, between the injection rim (33) and the beveled rim (34), on the first main face (31), on the second main face (32) or in the thickness of the waveguide (3).

12. The glazing as claimed in any one of the preceding claims, **characterized in that** it is a motor vehicle glazing.

13. A vehicle, preferably a motor vehicle, comprising a glazing as claimed in any one of the preceding claims.

14. The vehicle as claimed in the preceding claim, **characterized in that** the glazing forms part of the roof of the vehicle.
